# EUROPÄISCHE PATENTSCHRIFT

(11) **EP 3 037 157 B1**
(45) Veröffentlichungstag und Bekanntmachung des Hinweises auf die Patenterteilung: **10.08.2022**
(21) Anmeldenummer: 15200379.4
(22) Anmeldetag: 16.12.2015
(51) Int. Cl.: B01D 67/00, B01D 53/26, B01D 69/02, B01D 71/02, H01M 8/04119

(54) **KOHLENSTOFFMEMBRAN, VERFAHREN ZUR HERSTELLUNG VON KOHLENSTOFFMEMBRANEN UND DEREN VERWENDUNG**
CARBON MEMBRANE, METHOD FOR PRODUCING CARBON MEMBRANES AND THEIR USE
MEMBRANE EN CARBONE, PROCÉDÉ DE FABRICATION DE MEMBRANES EN CARBONE ET SON UTILISATION

(30) Priorität: 17.12.2014 DE 102014118892
(43) Veröffentlichungstag der Anmeldung: 29.06.2016
(73) Patentinhaber: Fraunhofer-Gesellschaft zur Förderung der angewandten Forschung e.V., 80686 München (DE); MUW SCREENTEC Filter- und Präzisionstechnik aus Metall GmbH, 29378 Wittingen (DE)
(72) Erfinder: RICHTER, Hannes, 07629 Hermsdorf (DE); KÄMNITZ, Susanne, 07616 Rauschwitz (DE); GRÜTZNER, Jörg, 16552 Schildow (DE); MARTIN, Dirk, 99085 Erfurt (DE); VOIGT, Ingolf, 07743 Jena (DE)
(74) Vertreter: Oehmke, Volker

(56) Entgegenhaltungen:
- WO-A1-2009/110001
- WO-A1-2012/041998
- DE-A1- 19 917 812
- US-A- 3 859 421
- US-A- 4 978 430
- US-A1- 2013 081 991
- OHYA H ET AL: "Methanation of carbon dioxide by using membrane reactor integrated with water vapor permselective membrane and its analysis", JOURNAL OF MEMBRANE SCIENCE, ELSEVIER BV, NL, Bd. 131, Nr. 1-2, 6. August 1997 (1997-08-06), Seiten 237-247, XP004084648, ISSN: 0376-7388, DOI: 10.1016/S0376-7388(97)00055-0
- SAUFI S M ET AL: "Fabrication of carbon membranes for gas separation--a review", CARBON, ELSEVIER, OXFORD, GB, Bd. 42, Nr. 2, 1. Januar 2004 (2004-01-01) , Seiten 241-259, XP004483335, ISSN: 0008-6223, DOI: 10.1016/J.CARBON.2003.10.022

## Beschreibung

Kohlenstoff zeichnet sich durch einen Schichtebenenabstand des Graphits aus, der mit 3,35 Å im Größenordnungsbereich kleiner Gasmoleküle liegt. Es ist bekannt, dass Kohlenstoff als Membran präpariert für die Gastrennung genutzt werden kann.

Bei der Pyrolyse von organischen Materialien entsteht ein Kohlenstoff, der nur diffuse Röntgenreflexe aufweist und deshalb als röntgenamorph bezeichnet wird. Er weist jedoch kleine periodische Bereiche auf, in denen mehr oder weniger starke Abweichungen von der idealen Kristallstruktur auftreten, weshalb häufig von parakristallinem Kohlenstoff die Rede ist. Glasartiger mikroporöser Kohlenstoff besitzt mit 1,2 - 1,6 g/cm³ eine geringere Dichte als kristalliner Graphit mit 2,2 g/cm³ und eine enge Porengrößenverteilung. Aufgrund des hohen Anteils an offener Porosität eignet sich Kohlenstoff ausgezeichnet als Adsorbens.

Durch die WO 2012/041998 A1 ist die Synthese von Kohlenstoffmembranen unter Verwendung von Polyestern offenbart. Dabei werden durch eine Pyrolyse eines dünnen abgeschiedenen Films Membranen mit sehr engen Porengrößenverteilungen und mittleren Porendurchmessern < 0,45 nm erhalten. Mittels dieser Membranen ist ein größenselektives Abtrennen kleiner Gasmoleküle, wie H₂O, H₂, He, N₂, möglich. Weiterführende Literatur ist ebenfalls der WO 2012/041998 A1 zu entnehmen.

Aus der EP 2 045 001 A1 ist der Einsatz von Phenolharzen, Melaminharzen, Harnstoffharzen, Furanharzen, Polyimidharzen oder Epoxidharzen sowie von Polyethylen, zellulosebasierten Harzen, gelöst in organischen Lösungsmitteln, zur Herstellung von Kohlenstoffmembranen durch Filmbildung und nachfolgende Pyrolyse des Harzes bekannt.

Als Präkursoren (auch: Precursor) für die Synthese isotroper Kohlenstofferzeugnisse werden in der Regel Polymere auf Kohlenwasserstoffbasis bevorzugt, die nach der Pyrolyse einen hohen Anteil an mikrokristallinem Kohlenstoff zurücklassen und sich unter Formstabilität zersetzen (siehe beispielsweise Fitzer, E., 1980: "Thermischer Abbau von Polymeren bis zum elementaren Kohlenstoff - ein Weg zu Werkstoffen der Zukunft"; Angewandte Chemie 92: 375 - 386). Dies gilt auch für die Synthese von Kohlenstoffmembranen. Bei Beschichtungen besteht hierbei der Vorteil, dass man über die Schichtdicke des als Ausgangsstoff eingesetzten Precursorpolymers die Schichtdicke einer nach der Pyrolyse erhaltenen Kohlenstoffschicht einstellen kann. Die Zersetzung unter Formstabilität ist einerseits zur Beschichtung komplexer Geometrien von Trägern erwünscht, verhindert andererseits auch ein Aufschmelzen und eine Umstrukturierung in die energetisch günstigere Form des Graphits sowie die Entstehung von Defekten (z. B. von Löchern, sogenannten pinholes), die durch entweichende gasförmige Zersetzungsprodukte hervorgerufen werden können. Polymere wie Phenolharz oder Polyfurfurylalkohol sind daher für die Synthese von Kohlenstoffmembranen naheliegend, weil nach der Pyrolyse 35 Ma% bzw. 55 Ma% des Polymers als Kohlenstoff verbleiben (z. B. Böder, H. und Fitzer, E., 1970: "Neue Formen des Kohlenstoffs"; Naturwissenschaften, 57: 29-36). Entsprechend werden die Synthesen von Kohlenstoffmembranen aus Furfurylakohol (US 3 859 421 A) und diversen anderen Precursoren (S.M. Saufi et al., Carbon 42 (2014) 241-259) beschrieben, wenn auch als selbsttragende Membranen.

Aus der US 8 608 828 B2 ist die Abscheidung der polymeren Präkursoren auf einem keramischen Träger beschrieben, der bei einer niedrigeren Temperatur vorbehandelt worden war als die Temperatur der Pyrolyse des polymeren Präkursors zu Kohlenstoff. Dadurch erfolgt eine Trägerporenweitung, was zu Membranen besonders hohen Flusses führt.

Die Nutzung von unterschiedlich präpariertem Kohlenstoff für verschiedenste Trennaufgaben wird vielfältig beschrieben. So werden Kohlenstoffmembranen zur Wasserstoffabtrennung aus Kohlenwasserstoffen genutzt, wie dies exemplarisch in der US 2003/083534 A1 beschrieben ist.

Auf keramischen Trägern abgeschiedene Kohlenstoffmembranen werden in der JP19960263695 für die Abtrennung von Spurenverunreinigungen, wie Trihalomethan, aus polaren Lösungen, wie Wasser und Ethanol, genutzt. Dabei wird bewusst die Hydrophobie des Materials genutzt, um eine Permeation der Lösemittel zu vermeiden, wohingegen die Spurenverunreinigung an der Oberfläche des Kohlenstoffs adsorbieren soll. Das gleiche Prinzip wird gemäß der Offenbarung der US 2003/034295 A1 bei der Abtrennung von Rinderalbumin (bovine serum albumin, BSA) aus Wasser genutzt, wobei poröse, metallische Träger zur Stützung der Kohlenstoffmembran genutzt werden.

Kohlenstoffhohlfasermembranen, die durch Pyrolyse von sulfonierten Poly(phenylenoxid) bei 600 °C erzeugt worden waren, konnten erfolgreich für die Trennung von Wasser aus Propanol durch Pervaporation eingesetzt werden (Yoshimune, M., Mizoguchi, K., Haraya, K., 2013: "Alcohol dehydration by pervoration using a carbon hollow fiber membrane derived from sulfonated poly(phenylene oxide)", Journal of Membrane Science 425: 149-155). Dabei konnte jedoch auch die Permeation von Propanol beobachtet werden, was auf Poren > 0,45 nm schließen lässt. Des Weiteren wurden Sauerstoff, und damit polare Zentren, im Material vermutet, die auf eine bevorzugte Adsorption von Wasser schließen lassen. Bei den Membranen handelt es sich also um sogenannte adsorptionsselektive Kohlenstoffmembranen (adsorptive selective carbon membrane, ASCM), die in einer flüssigen Phase eingesetzt sind.

Eine typische ASCM-Membran wird durch US 2013/0081991 A1 beschrieben. Ein mit besonders vielen hydrophilen Gruppen ausgestattetes Phenaolharz wurde pyrolysiert, was zu einem Kohlenstoff mit einem hohen Anteil polarer Gruppen führte. Erwartungsgemäß konnte mit einer derartigen Membran im Pervaporationsversuch Wasser von Ethanol abgetrennt werden. Selektivität und Fluss konnten durch weiteren Einbau polarer Gruppen, wie z.B. von Sauerstoff durch eine nachgelagerte Ozonbehandlung erheblich gesteigert werden.

Alternative, hydrophile Membranen, wie Kompositmembranen mit hydrophilen Füllstoffen bestehend aus Metalloxiden (TiO₂, ZrO₂, SiO₂, DE 199 17 812 A1) oder natürlichen Mineralien (Montmorilonit, WO 2009110001 A1), wie sie für die Befeuchtung der Brenngase in Brennstoffzellen eingesetzt werden, würden eine selektive Abtrennung von Wasser aus einem Gasgemisch erwartungsgemäß ermöglichen. Auf Grund der polymeren Komponenten wären diese Kompositmembranen (Nafion, bzw. Chitosan/Hydroxyethylzellulose) für die Wasserabtrennung aus heißen chemischen Gleichgewichtreaktionen völlig ungeeignet. Zur Trennung von Wasser von ähnlich großen, gasförmigen Molekülen wie H₂, CO₂ oder CH₄ kann eine Membran, bestehend aus mehreren übereinanderliegenden Schichten von mikroporösem Glas, verwendet werden (Haruhiko Ohya et al., 1997: "Methanation of carbon dioxide by using membrane reactor integrated with water vapor permselective membrane and its analysis", Journal of Membrane Science 131: 237-247). Eine solche Membran weist je nach Anzahl der Lagen eine mittlere Porengröße von bis zu wenigen nm auf.

Wasserdampf kann mit einer solchen Membran selektiv aus einem Gas- oder Reaktionsgemisch abgetrennt werden. Dadurch kann das Reaktionsgleichgewicht einer chemischen Reaktion unter Anwesenheit eines wasserhaltigen Gasgemisches zugunsten der Entstehung der Produkte verschoben werden. Eine solche Membran ist aufgrund der für eine Porengröße im Bereich einiger Ä erforderlichen Anzahl an Schichten jedoch verhältnismäßig dick. Außerdem nimmt mit zunehmender Anzahl an Schichten die Permeanz der Membran ab.

Der Erfindung liegt die Aufgabe zugrunde, die Verwendung einer alternativen permselektiven Membran aus Kohlenstoff mit hinreichend kleinen Poren vorzuschlagen, die durch Porenkondensation von Wasser die Abtrennung von Wasser aus Gasgemischen bei hohen Temperaturen und Drücken gestattet, wobei ein nahezu vollständiger Rückhalt für alle anderen Gasmoleküle erreicht werden kann.

Die Aufgabe wird durch die Gegenstände der unabhängigen Ansprüche gelöst. Durch die Unteransprüche sind vorteilhafte Ausgestaltungen angegeben.

Die Aufgabe wird durch die Verwendung einer permselektiven Membran zur Abtrennung von Wasserdampf aus Gasgemischen gelöst, wobei die permselektive Membran eine Kohlenstoffmembran aus einem Material ist, dessen Struktur graphitähnlich und durch wenigstens eine Folge von Schichten des Materials gebildet ist. Dabei liegen die Schichten des Materials in Ebenen angeordnet vor. Zwischen benachbarten Schichten liegt ein mittlerer Abstand der Schichten von mehr als 0,335 nm (3,35 Å) und weniger als 0,45 nm (4,5 Å) vor. Die Folge der Schichten ist turbostratisch fehlgeordnet.

Wie aus der vorgenannten WO 2012/041998 A1 bekannt ist, besitzen amorphe oder mikrokristalline Kohlenstofffilme eine hohe chemische Inertheit. Sie weisen sp²- und sp³-Bindungen auf und zeigen daher Eigenschaften, die zwischen denen von Graphit und Diamant liegen. Die graphitähnlichen Strukturen bestehen aus einer turbostratisch fehlgeordneten Schichtenfolge, in der vorhandene Mikrokristallite durch stark deformierte und fehlorientierte Graphitschichten verknüpft sind.

Beim Einsatz von nanoporösem Kohlenstoff als Membranwerkstoff können hohe Permeanzen mit gleichzeitig hoher Selektivität erreicht werden, da die Gaspermeation im Gegensatz zu Polymermembranen nicht eines Lösens in der Matrix bedarf, sondern durch die Diffusion durch die Netzebenenabstände (Poren) des Kohlenstoffs erfolgen kann.

Sind die Netzebenenabstände hinreichend klein und befinden sich keine weiteren Heteroatome im Netzwerk, die zur Ausbildung polarer Zentren führen, erfolgt die Trennung von Gasgemischen mit unterschiedlichen Moleküldurchmessern auf Grund des Größenausschlusses der größeren Molekülsorte. Man spricht dann von molsiebenden Kohlenstoffmembranen (molecular sieve carbon membrane, MSCM). Die Permeation der Gase kann dann im Idealfall als reine Gasdiffusion verstanden werden. Befinden sich hingegen zusätzliche Heteroatome zwischen den graphitischen Schichtebenen, was einerseits zu einer Aufweitung der Netzebenenabstände und somit einer Porenvergrößerung, andererseits zum Einbau polarer Zentren führt, wird die Permeation von adsorbierbaren Gasen, wie z. B. CO₂, von Oberflächendiffusionsprozessen bestimmt. Man spricht dann von adsorptionsselektiven Kohlenstoffmembranen (adsorptive selective carbon membrane, ASCM). Die Trennung funktioniert durch die selektive Adsorption und Oberflächendiffusion einer Komponente auf die Niederdruckseite der Membran, wo sie schließlich desorbiert. In Gemischen aus adsorbierbaren und nichtadsorbierbaren Gasen wird die Permeation der nicht adsorbierenden Komponente durch die adsorbierten Gasmoleküle behindert. Die nicht adsorbierenden Gase müssen für die Diffusion durch die Membran zunächst eine Potentialbarriere überwinden. Die ASCM erlauben die Trennung von Gasgemischen mit ähnlichen Molekülradien oder sogar die Abtrennung größerer von kleineren Molekülen. Die mittleren Porengrößen liegen bei der MSCM im Bereich < 0,45 nm. Die mittleren Porengrößen bei der ASCM sind mit 0,45 - 0,70 nm deutlich größer.

Die Trenneigenschaften von Kohlenstoffmembranen können durch Wahl des Präkursors und der Synthesebedingungen eingestellt werden. Ein weiterer Vorteil des Kohlenstoffs als Material der Membran ist die Möglichkeit, auch nach der Synthese mittels thermochemischer Behandlung Heteroatome in die vorhandene Netzebenenstruktur zu interkalieren oder zu entfernen, wodurch aus gleichem Ausgangmaterial Membranen mit unterschiedlichen Permeations- und Trenneigenschaften hergestellt werden können.

Bei der MSCM mit einer geringen Porengröße < 0,45 nm befinden sich nur wenige Heteroatome im Netzwerk, weshalb nahezu keine polaren Zentren existieren. Im Ergebnis ist das Material hydrophob, was durch Bestimmung des Kontaktwinkels beim Aufsetzen von Wassertropfen nachgewiesen werden konnte. Bei der Permeation von Gasmolekülen, wie Wasser, Wasserstoff, Kohlendioxid, Sauerstoff, Stickstoff, Methan, wird entsprechend deren zunehmenden Moleküldurchmessern die Permeation abnehmen. Wasser wird folglich die höchste Permeationsrate aufweisen. Im Gemisch von gasförmigem Wasser mit anderen Gasen wird dennoch eine gewisse Permeation der übrigen Gase auftreten.

Eine zur erfindungsgemäßen Verwendung vorgeschlagene permselektive Membran (auch kurz als Membran bezeichnet) weist in ihrer Struktur nur wenige Defekte mit einer Größe > 0,45 nm auf (von allen vorhandenen Poren sind << 1 % größer als 0,45 nm), weshalb eine mehr als 5.000-mal höhere Permeation für Wasserstoff als für n-Butan gefunden wird.

Das Material der Membran ist vorzugsweise wenigstens auf seinen freien Oberflächen hydrophob.

Eine permselektive Membran kann als eine Schicht auf einem porösen keramischen Träger vorhanden sein, wodurch eine Anordnung der Membran gegeben ist. Die Membran kann dabei mittels bekannter Verfahren auf den Träger aufgebracht sein. Beispielsweise kann der Träger mit einem Präkursor der Membran beschichtet und die Schicht des Präkursors auf dem Träger pyrolisiert worden sein.

Überraschenderweise wurde gefunden, dass bei erfindungsgemäßer Verwendung einer MCSM im Gemisch aus gasförmigem Wasser und anderen Gasen (wasserhaltiges Gasgemisch) eine vollständige Blockierung der Mikroporen durch Wasser erreicht werden kann, wodurch eine ausschließliche Permeation von Wasser bei vollständigem Rückhalt für andere Gase erreicht werden kann. Dies konnte auch bei sehr hohen Temperaturen bis 300 °C gezeigt werden.

Die Membran besteht aus einem oberflächlich hydrophoben, nicht polaren Kohlenstoffmaterial und weist Poren im Größenordnungsbereich von 0,335 nm bis 0,45 nm auf. Aus WO 2012/041998A1 wäre zu erwarten gewesen, dass bei einer derartigen Membran alle Gasmoleküle kleiner 0,45 nm, wie z.B. CH₄ (0,376 nm), N₂ (0,364 nm), O₂ (0,347 nm), CO₂ (0,33 nm), H₂ (0,289 nm) und He (0,255 nm) ebenfalls durch die Membran permeieren würden. Das ist nicht der Fall.

Eine permselektive Membran oder eine Anordnung der Membran auf einem Träger kann erfindungsgemäß zur Abtrennung von Wasser aus chemischen Gleichgewichtsreaktionen, bei denen die Gleichgewichtsreaktionen unter Anwesenheit eines wasserhaltigen Gasgemisches erfolgen, verwendet werden.

Ein Verfahren zur Herstellung einer Membran besteht darin, dass ein poröser Trägerkörper mit einem Polymer, wie Polyimid, Polyfurfurylalkohol, Phenolharz, Polysaccharide, bevorzugt aber mit einem ungesättigten Polyester als Präkursor beschichtet wird und anschließend die Beschichtung bei Temperaturen zwischen 500 °C und 1.200 °C unter inerten Bedingungen pyrolysiert wird. Der Kohlenstoff besitzt eine graphitähnliche Struktur mit turbostratisch fehlgeordneter Schichtenfolge, in der die Mikrokristallite, die eine Größe aufweisen, so dass sie röntgenamorph sind, durch stark deformierte und fehlorientierte Graphitschichten verknüpft sind. Mikrokristallinität und statistische Orientierung ermöglichen die Permeation kleiner Gasmoleküle durch die Netzebenenabstände des Kohlenstoffs in beliebiger Raumrichtung.

Der Schichtebenenabstand beträgt < 0,45 nm, wobei der jeweilige Schichtebenenabstand als Pore definiert wird. Die Kohlenstoffmembran zeigt ausschließlich ein größenselektives Trennverhalten. Die freien Oberflächen der Kohlenstoffmembran sind hydrophob.

Die Membran weist insbesondere den Vorteil auf, dass durch diese bei erhöhter Temperatur bis 400 °C Wasser aus wasserhaltigen Gasgemischen durch Kondensation des Wassers in den Poren abtrennbar ist. Dabei werden die Poren impermeabel für andere Gase des Gasgemisches. Die Membran ist zugleich durch ihren Schichtebenenabstand < 0,45 nm, ihre hydrophoben freien Oberflächen sowie ihre Fähigkeit zur vorstehend beschriebenen Kondensation von Wasser in ihren Poren charakterisiert.

Die Kohlenstoffmembranen werden durch Abscheidung und Pyrolyse eines polymeren Precursors, vorzugsweise von Lösungen ethylenisch ungesättigter Polyester, auf einem porösen, keramischen Träger und durch anschließende Pyrolyse unter inerten Bedingungen hergestellt.

Der Träger kann dabei einen asymmetrischen Schichtaufbau aufweisen, bei dem die Membran auf einer Folge von Zwischenschichten poröser Substrate angeordnet ist, bei der die einzelnen Zwischenschichten voneinander verschiedene Porositäten besitzen. Die Porosität kann in Richtung der Membran abnehmen. Als poröse Substrate eignen sich Werkstoffe wie poröse Metalle, poröse Keramiken, poröse Gläser oder poröse Komposite daraus.

Bevorzugt weist das poröse Substrat eine mesoporöse keramische Oxidschicht aus TiO₂, ZrO₂, Al₂O₃, SiO₂ oder Mischungen daraus auf, die mit der Lösung des ethylenisch ungesättigten Polyesters oder einem anderen polymeren Precursor beschichtet wird. Besonders bevorzugt ist die mesoporöse keramische Oxidschicht aus γ-Al₂O₃ gemäß der vorgenannten US 8 608 828 B2 aufgebaut.

Die Beschichtung des porösen Trägers kann durch Eintauchen, Aufsprühen, Imprägnierungsverfahren usw. erfolgen. Die Beschichtung kann durch eine oder mehrere Schichten der Präkursorlösung gebildet werden. Bevorzugt wird ein Dipcoating-Verfahren zum Aufbringen der Präkursorlösung eingesetzt.

Es folgt ein Trocknungsschritt bei 17 °C bis 30 °C über einen Zeitraum von mehreren Stunden. Es kann sich ein Aushärten der Schichten bei Temperaturen zwischen 30 °C und 250 °C anschließen, um die Fließfähigkeit des Präkursors zu reduzieren. Die Pyrolyse der Polymerbeschichtung auf dem porösen Substrat zur Ausbildung der Kohlenstoffmembran wird vorzugsweise unter Inertgas bei Temperaturen im Bereich von 500 bis 1200 °C, besonders bevorzugt von 650 bis 750 °C, durchgeführt. Dabei beträgt die Haltezeit während der Pyrolyse vorzugsweise 0,5 bis 17 Stunden, besonders bevorzugt 1 bis 2 Stunden.

Durch die Pyrolyse entsteht hochporöser Kohlenstoff, dessen Porengrößen in Abhängigkeit von der Art und Morphologie des Präkursors und den Pyrolysebedingungen variiert. Die Pyrolysebedingungen haben einen Einfluss auf die erzielbaren Trenneigenschaften der erhaltenen Kohlenstoffmembran. Aufheizrate, Pyrolysetemperatur und Pyrolysedauer sind dabei einstellbare Größen.

Die erhaltene Kohlenstoffmembran weist einen mittleren Porendurchmesser < 0,45 nm auf. Diese Membranen lassen nur Moleküle mit einem kleineren kinetischen Gasdurchmesser passieren, die in das Porensystem der Membran eindringen können. Dabei handelt es sich insbesondere um Helium, Wasserstoff, Ammoniak, Kohlendioxid, Sauerstoff, Stickstoff, Methan. Der Mechanismus der Trennung dieser Gase erfolgt dabei nicht über ein unterschiedliches Adsorptions- und Transportverhalten der zu trennenden Gase, sondern durch größenselektive Trennung (molecular sieving). Wasser bildet jedoch eine Ausnahme. Wasser kann auch bei hohen Temperaturen bis 400 °C in den Poren der Membran kondensieren und die Poren gegen die Permeation anderer Gase vollständig blockieren.

Wird über die Membran eine Wasserdampfpartialdruckdifferenz eingestellt, dann erfolgt der selektive Transport von Wasser aus Gasgemischen durch die Mikroporen der MSCM. Andere Gase, die ebenfalls auf Grund ihres geringen kinetischen Moleküldurchmessers in die Poren eindringen könnten, werden durch das kondensierte Wasser an der Permeation durch die Poren gehindert. Dadurch findet die ausschließliche Permeation von Wasser bei vollständigem Rückhalt aller anderen Gase statt.

Eine Wasserdampfpartialdruckdifferenz wird eingestellt, indem beispielsweise an einer Seite der Membran, die einem wasserhaltigen Gasgemisch abgewandt ist (nachfolgend auch als Permeatseite oder Permeatraum bezeichnet), eine geringere Konzentration an Wasser vorliegt als an der dem wasserhaltigen Gasgemisch zugewandten Seite der Membran (nachfolgend auch als Feedseite, Eduktseite oder Reaktorraum bezeichnet). Stattdessen oder zusätzlich kann in dem Permeatraum eine geringere Temperatur als in dem Reaktorraum eingestellt sein.

Die Membran eignet sich zur Trocknung heißer Gase, wie diese beispielsweise bei Verbrennungsprozessen anfallen können. Dabei kann eine dem Verbrennungsprozess nachgelagerte Abkühlung des Gasstromes der Verbrennungsprodukte zum Zwecke der Auskondensation des Wassers vermieden werden.

Besonders eignen sich die Membranen zur Abtrennung von Wasser aus chemischen Gleichgewichtsreaktionen, bei denen Wasser als ein Produkt entsteht. Durch den Entzug des Wassers kann eine Verschiebung des Gleichgewichts zugunsten der Entstehung der Produkte bewirkt werden.

Eine weitere Anwendung ist der Wasseraustausch zwischen zwei Gasströmen, wobei gleichzeitig eine Wärmeübertragung erfolgen kann, wie z. B. bei der Befeuchtung und Erwärmung von in eine Polymerelektrolytbrennstoffzelle (PEM-Brennstoffzelle) einströmenden Gasen mit aus den feuchten und heißen Abgasen der Polymerelektrolytbrennstoffzelle abgetrenntem Wasser. Dabei ist durch den Wasserüberschuss der Abgase und den geringen oder fehlenden Wassergehalt der einströmenden Gase eine Wasserdampfpartialdruckdifferenz zwischen einem Reaktorraum, in dem die Abgase vorhanden sind, und einem Permeatraum, der beispielsweise durch ein Zuleitungsrohr oder einen zu durchströmenden Raum gebildet ist, bewirkt. Die Membran ist dabei zwischen Reaktorraum und Permeatraum angeordnet.

Die Erfindung wird durch die nachstehenden Ausführungsbeispiele und Abbildungen näher erläutert. Dabei zeigen:
- Fig. 1: eine Anordnung einer permselektiven Membran 1 auf einem Träger 2 und einer Folge von Zwischenschichten 3.1, 3.2, 3.3,
- Fig. 2: ein erstes Ausführungsbeispiel einer Vorrichtung als schematischer Teilschnitt eines Bereichs einer Polymerelektrolyt-brennstoffzelle unter erfindungsgemäßer Verwendung einer permselektiven Membran 1,
- Fig. 3: ein zweites Ausführungsbeispiel einer Vorrichtung als schematischer Teilschnitt einer Reaktoranlage unter erfindungsgemäßer Verwendung einer permselektiven Membran 1,
- Fig. 4: eine erste Tabelle mit Werten ermittelter Permeanzen in Abhängigkeit vom kinetischen Moleküldurchmesser verschiedener Gase und
- Fig. 5: eine zweite Tabelle mit Werten ermittelter Permeanzen der verschiedenen Gase bei verschiedenen Temperaturen und Drücken.

### Beispiel 1:

Eine Membran 1 wurde als eine Kohlenstoffmembran gemäß der vorgenannten WO 2012/041998 A1 hergestellt. Die Herstellung der Präkursorlösung erfolgte durch Reaktion eines Diols mit mindestens einer ungesättigten Carbonsäure zu einem ungesättigten Polyester und durch anschließende Zugabe eines Olefins. Es wurden in einem 250 ml-Zweihalskolben 19,98 g 1,2-Propandiol (0,25 mol + 5 % Überschuss), 12,26 g Maleinsäureanhydrid (0,125 mol) und 18,52 g Phthalsäureanhydrid (0,125 mol) eingewogen. Anschließend wurden 0,01 g Hydrochinon als Polymerisationsinhibitor zugesetzt, um vorzeitige Polymerisations- oder Vernetzungsvorgänge zu verhindern. Unter Stickstoffatmosphäre wurden die eingewogenen Rohstoffe mittels Ölbad auf eine Reaktionstemperatur von 200 °C erhitzt. Zur Kontrolle der Kettenbildung wurde in regelmäßigen Abständen die Säurezahl durch Titration mit KOH-Lösung bestimmt. Bei einer Säurezahl von ca. 50 wurde die Reaktion durch schnelles Abkühlen auf 140 °C abgebrochen. Mit Hilfe eines Tropftrichters wurden anschließend unter heftigem Rühren innerhalb von einer Minute 50 g Styrol als Vernetzer zugegeben. Das zugesetzte Styrol wurde vorher auf 50 °C erwärmt. Um eine vorzeitige Polymerisation des Polyester-Styrol-Gemisches zu verhindern, wurde die ungesättigte Polyesterharzlösung im Wasserbad auf Raumtemperatur abgekühlt. Danach wurde dem Polyester-Styrol-Gemisch 1 % Dibenzoylperoxid als Radikalbildner zugesetzt und anschließend wurde 5 Minuten bei Raumtemperatur gerührt.

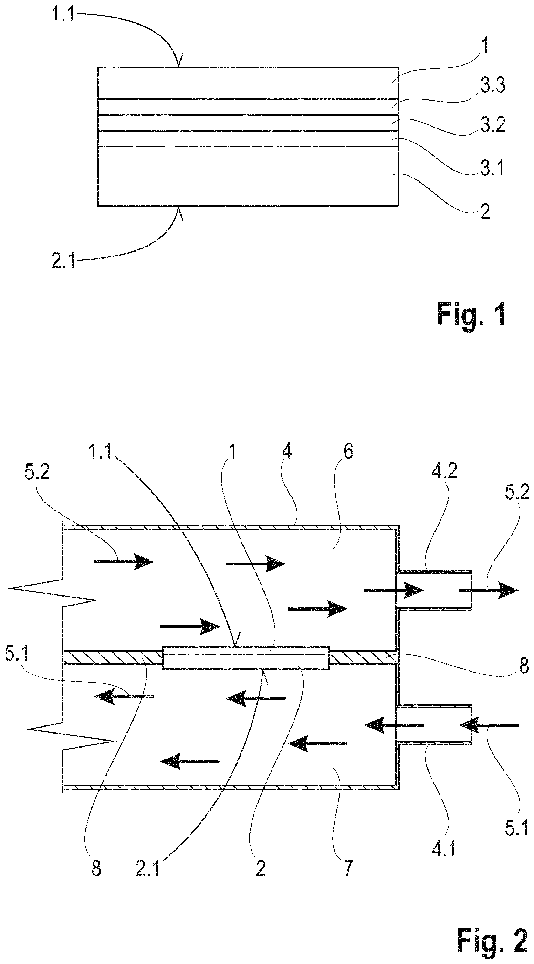

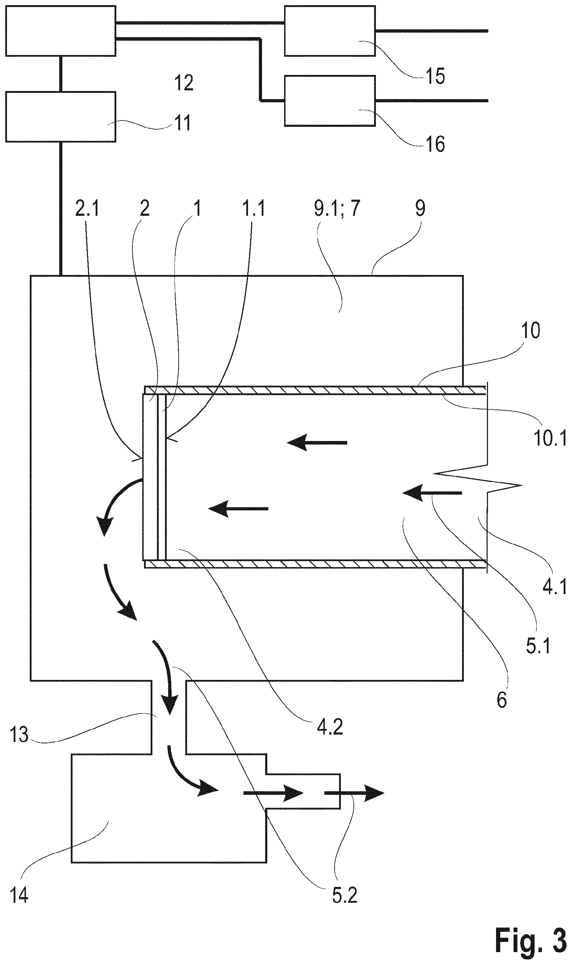

Als Träger 2 für die Membranen 1 (Fig. 1; Fig. 3) wurden keramische Einkanalrohre aus α-Al₂O₃ mit einer Länge von 250 mm, mit einem Innendurchmesser von 7 mm und einem Außendurchmesser von 10 mm verwendet, die auf der Innenseite Zwischenschichten 3.1 bis 3.3 mit abnehmender Porengröße besitzen. Als eine (oberste) dritte Zwischenschicht 3.3 wurde eine γ-Al₂O₃-Schicht mit einer Porengröße von 5 nm und einer Dicke von 1 - 2 µm eingesetzt.

In weiteren Ausführungen des Verfahrens und der Membranen 1 können andere Anzahlen von Zwischenschichten oder keine Zwischenschichten vorhanden sein. Außerdem können die mittleren Porengrößen vorhandener Zwischenschichten anders als oben angegeben sein.

Die γ-Al₂O₃-Schicht wurde im Dipcoating-Verfahren mit der klaren, viskosen und leicht gelblich gefärbten Präkursorlösung (Lösung) beschichtet. Dazu wurde die Lösung in das Rohr gefüllt und nach einer Verweilzeit von 1 Minute wieder abgepumpt. Die so erhaltene Beschichtung wurde 24 h an der Luft getrocknet und anschließend im Trockenschrank bei einer Temperatur von 80 °C für 12 h ausgehärtet. Nach der Vernetzung des Polymers zum Duroplasten wurde die Beschichtung bei einer Temperatur von 800 °C unter Stickstoff- und Argonatmosphäre zu Kohlenstoff zersetzt und eine Anordnung von Membran 1 und Träger 2 erhalten.

In der Fig. 1 ist vereinfacht und nicht maßstabsgerecht ein Ausführungsbeispiel einer Anordnung einer Membran 1 auf einem Träger 2 aus einem porösen Material gezeigt. Zwischen dem Träger 2 und der Membran 1 sind eine erste Zwischenschicht 3.1 mit einer Porengröße von 0,1 bis 3 µm, eine zweite Zwischenschicht 3.2 mit einer Porengröße von 0,01 bis 0,5 µm und eine dritte Zwischenschicht 3.3 mit einer Porengröße von 0,3 bis 20 nm vorhanden. Eine freie und in der Fig. 1 nach oben weisend gezeigte Seitenfläche der Membran 1 ist die Eduktseite 1.1, während eine in der Fig. 1 nach unten weisend gezeigte Seitenfläche des Trägers 2 die Permeatseite 2.1 der Anordnung ist.

Fig. 2 zeigt schematisch ein erstes Ausführungsbeispiel einer Vorrichtung als Teilschnitt eines Bereichs einer Polymerelektrolytbrennstoffzelle (PEM-Brennstoffzelle 4) unter erfindungsgemäßer Verwendung einer permselektiven Membran 1. In dem lediglich stark vereinfacht gezeigten Bereich der PEM-Brennstoffzelle 4 sind ein Reaktorraum 6 und ein Permeatraum 7 vorhanden, die durch eine Trennwand 8 voneinander getrennt sind. In der Trennwand 8 ist eine Anordnung einer Membran 1 auf einem Träger 2 vorhanden, durch die ein Übergang von Molekülen zwischen dem Reaktorraum 6 und dem Permeatraum 7 ermöglicht ist. Die Membran 1 ist mit ihrer Eduktseite 1.1 in den Reaktorraum 6 gerichtet, während der Träger 2 mit seiner Permeatseite 2.1 in den Permeatraum 7 gerichtet ist.

Das einströmende Gas 5.1 ist weitgehend wasserfrei und weist eine Eingangstemperatur auf. Es gelangt über die Medienzuleitung 4.1 in den Permeatraum 7, durchströmt diesen und gelangt anschließend zu weiteren Bereichen der PEM-Brennstoffzelle 4 (nicht gezeigt). Der Reaktorraum 6 wird von einem Abgas 5.2 durchströmt, das wasserhaltig ist und eine Temperatur aufweist, die höher als die Eingangstemperatur des einströmenden Gases 5.1 ist. Infolge der zwischen dem Reaktorraum 6 und dem Permeatraum 7 bestehenden Wasserdampfpartialdruckdifferenz tritt an der Eduktseite 1.1 Wasser in die Membran 1 ein und kondensiert in den Poren der Membran 1. Die Membran 1 ist dann für Atome und Moleküle anderer Stoffe und Elemente blockiert, während Wasser durch die Membran 1 permeieren kann. Ein Mengenanteil des Wassers des Abgases 5.2 gelangt so durch die Membran 1 und den Träger 2 in den Permeatraum 7 und wird von dem einströmenden Gas 5.1 aufgenommen. Zugleich wird dem einströmenden Gas 5.1 die Wärmemenge mitgeteilt, die das permeierte Wasser im Vergleich zur Eingangstemperatur des einströmenden Gases 5.1 als Überschuss besitzt. Der nicht permeierende Mengenanteil des Abgases 5.2 wird über eine Medienableitung 4.2 aus dem Reaktorraum 6 abgeführt.

In der Fig. 3 ist schematisch ein zweites Ausführungsbeispiel einer Vorrichtung als schematischer Teilschnitt einer Reaktoranlage unter erfindungsgemäßer Verwendung einer permselektiven Membran 1 dargestellt. Von einem Gehäuse 9 ist ein Innenraum 9.1 umschlossen, der zugleich als Permeatraum 7 fungiert. In den Innenraum 9.1 ragt ein als Rohr ausgebildeter Hohlkörper 10 hinein. Ein aus dem Gehäuse 9 ragendes Ende des Hohlkörpers 10 ist als eine erste Öffnung ausgebildet, die als Medienzuleitung 4.1 zur Einleitung eines wasserhaltigen Gasgemischs als einströmendes Gas 5.1 in den Hohlkörper 10 dient. Ein in dem Innenraum 9.1 angeordnetes Ende des Hohlkörpers 10 ist als zweite Öffnung ausgebildet und durch eine Anordnung einer Membran 1 auf einem Träger 2 verschlossen. Die zweite Öffnung dient als Medienableitung 4.2 zur Ableitung des Abgases 5.2 aus dem Reaktorraum 6. Dabei weist die Eduktseite 1.1 in das Innere des Hohlkörpers 10, das den Reaktorraum 6 darstellt. Die Permeatseite 2.1 weist in den Permeatraum 7. Die Anordnung von Membran 1 und Träger 2 ist zu einer Innenwand 10.1 des Hohlkörpers 10 gasdicht abgeschlossen, sodass Atome und Moleküle aus dem Reaktorraum 6 nur durch die Anordnung von Membran 1 und Träger 2 in den Permeatraum 7 gelangen können.

Der Permeatraum 7 ist über eine Gasleitung 13 mit einer Kühlfalle 14 verbunden, in die geregelt Permeat aus dem Permeatraum 7 eingeleitet werden kann. Der Permeatraum 7 ist mit einer Vakuumpumpe 11 verbunden, die einer Drucksenkung im Innenraum 9.1 gegenüber einem Druck in dem Hohlkörper 10 dient. Weiterhin sind eine Druckeinstellvorrichtung 15 und eine Temperatureinstellvorrichtung 16 vorhanden, mittels denen in dem Innenraum 9.1 des Gehäuses 9 und in dem Hohlkörper 10 Druckverhältnisse und Temperaturen einstellbar sind (Verbindungen nur angedeutet gezeigt).

Vakuumpumpe 11, Druckeinstellvorrichtung 15 und eine Temperatureinstellvorrichtung 16 stehen signaltechnisch mit einer Steuerungseinheit 12 in Verbindung. In weiteren Ausführungen der Vorrichtung kann durch die Steuerungseinheit 12 zusätzlich eine Durchflussmenge durch die Gasleitung 13 und/ oder die Betriebsparameter der Kühlfalle 14, beispielsweise deren Temperatur, Kühlmittelzu- und -abfuhr, Durchflussmenge des Permeats, gesteuert sein.

In einer weiteren Ausführung der Vorrichtung kann der Hohlkörper 10 wenigstens über seine in den Innenraum 9.1 / Permeatraum 7 ragenden Abschnitte als Träger 2 ausgebildet sein und eine Membran 1 tragen. Durch eine solche Gestaltung ist eine große Übergangsfläche zwischen Reaktorraum 6 und Permeatraum 7 erreicht (siehe Beispiel 4).

Zur Erläuterung der nachfolgenden Beispiele wird gegebenenfalls auf eine oder mehrere der Figuren 1 bis 5 Bezug genommen.

### Beispiel 2:

Es wird eine Membran 1 gemäß Beispiel 1 (Fig. 1) hergestellt, jedoch wird als Träger 2 eine poröse flache Scheibe aus α-Al₂O₃ mit einer Dicke von 2 mm und einem Durchmesser von 18 mm verwendet, die auf der Oberseite Zwischenschichten 3.1 bis 3.3 mit abnehmender Porengröße besitzt. Die als oberste Zwischenschicht gezeigte dritte Zwischenschicht 3.3 ist eine γ- Al₂O₃-Schicht mit einer Porengröße von 5 nm und einer Dicke von 1 - 2 µm. Die Beschichtung des Trägers 2 erfolgt durch das Eintauchen der Trägeroberfläche in die Präkursorlösung für eine Minute. Anschließend erfolgt ein Abschleudern bei 500 U/min für eine Minute. Die Trocknung und die Pyrolyse werden analog zu Beispiel 1 durchgeführt. Es wird eine Anordnung von Membran 1 und Träger 2 mit Zwischenschichten 3.1 bis 3.3 erhalten.

### Beispiel 3:

Eine nach Beispiel 2 hergestellte Anordnung einer Membran 1 auf einem flachen Träger 2 wird in ein geeignetes Messgerät, wie den Contact Angle System OCA20 von dataphysics, horizontal eingesetzt. Mit einer Kanüle wird ein Wassertropfen mit wenigen Mikrolitern Volumen auf die Eduktseite 1.1 der Membran 1 aufgesetzt. Über eine seitlich angebrachte Kamera wird unter Verwendung einer in das Gerät integrierten Auswertesoftware der Benetzungswinkel des Wassertropfens auf der Kohlenstoffschicht bestimmt. Es werden fünf Wassertropfen auf die Membran 1 aufgesetzt und an jedem Wassertropfen der Benetzungswinkel an zwei Seiten gemessen. Anschließend wird der Mittelwert errechnet. Dabei wurde für die untersuchte Membran ein mittlerer Benetzungswinkel von 94° ermittelt. Das Kohlenstoffmaterial weist folglich hydrophobe Oberflächen auf.

### Beispiel 4:

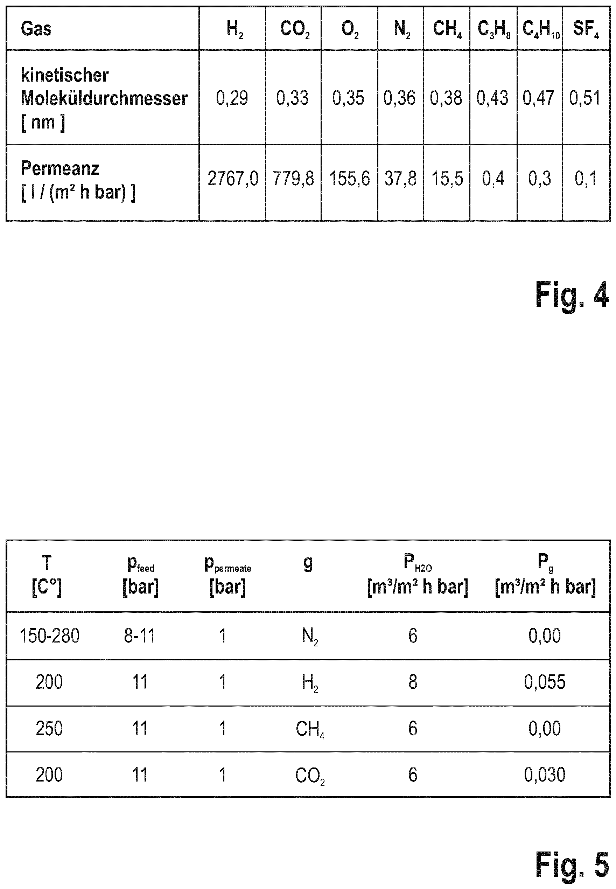

Eine nach Beispiel 1 hergestellte Membran 1 wird in ein Gehäuse 9 aus Edelstahl eingebaut (Fig. 3), wodurch mittels polymerer O-Ringdichtungen (nicht gezeigt) eine räumliche Trennung zwischen der Hohlkörperinnen- und -außenseite ermöglicht wird. Die Hohlkörperinnenseite wird mit einem Gas 5.1 beaufschlagt (Feedseite, Eduktseite 1.1, Reaktorraum 6). Der Absolutdruck beträgt dabei 1 bar, die Temperatur ist 70 °C. Die Hohlkörperaußenseite (Permeatseite 2.1) wird mit einer als Drehschiebervakuumpumpe ausgebildeten Vakuumpumpe 11 evakuiert. Bei Erreichen eines Druckes von < 10 mbar in dem Permeatraum 7 wird durch Schließen eines Ventils die Vakuumpumpe 11 von dem Permeatraum 7 getrennt. Durch die folgende Permeation des Gases von der Eduktseite 1.1 durch die Poren der Membran 1 auf die Permeatseite 2.1 in den Permeatraum 7 erfolgt ein Druckanstieg in dem ansonsten abgeschlossenen Permeatraum 7. Aus dem Druckanstieg kann der Gasfluss pro Zeiteinheit, Membranfläche und Differenzdruck (Permeanz) ermittelt werden. Nach der Messung wird die Verbindung zur Vakuumpumpe 11 wieder hergestellt und bei Erreichen eines Druckes von < 10 mbar im Permeatraum 7 eine erneute Messung vorgenommen. Für ein Gas werden mindestens drei Messungen vorgenommen und der Mittelwert gebildet. Die Messungen werden mit verschiedenen Gasen (siehe Fig. 4 und 5 sowie Beispiele 5 bis 11) wiederholt.

Für eine nach Beispiel 1 synthetisierte Membran 1 wurden die in der Fig. 4 tabellarisch aufgeführten Ergebnisse ermittelt. Dabei sind die auf der Eduktseite 1.1 eingesetzten Gase molekularer Wasserstoff, molekulares Kohlendioxid, molekularer Sauerstoff, Methan, Kohlenwasserstoffe (Alkane) der Summenformel C₃H₈ und C₄H₁₀ sowie Schwefelhexafluorid aufgeführt. Zu diesen Gasen ist jeweils der kinematische Gasdurchmesser angegeben. Die ermittelte Permeanz ist der untersten Zeile zu entnehmen.

Es ist eine kontinuierliche Abnahme der Permeanzen mit zunehmenden kinetischen Moleküldurchmessern von 0,29 nm (H₂) bis 0,43 nm (C₃H₈) zu beobachten. Dabei handelt es sich um die größenselektive Permeation durch die Netzebenenabstände des Kohlenstoffs. Für Moleküle mit einem kinetischen Moleküldurchmesser ≥ 0,43 nm ist nur noch eine sehr geringe Abnahme der Permeation zu beobachten. Dabei handelt es sich um eine Permeation infolge von vorhandenen Membrandefekten. Aus den Messungen kann auf einen sehr geringen Defektanteil in der Membran 1 geschlossen werden. Der Netzebenenabstand im Kohlenstoff ist 0,38 nm < d < 0,43 nm. Es werden keine erhöhten Permeanzen für polare Moleküle, wie CO₂, beobachtet. Es handelt sich um eine molsiebende Membran 1 (MCSM).

### Beispiel 5:

Eine gemäß Beispiel 1 hergestellte Membran 1 wird in eine Vorrichtung gemäß Beispiel 4 eingebaut. Die Innenwand 10.1 des als Rohr ausgebildeten Hohlkörpers 10 wird mit einem gasförmigen Gemisch aus 0,5 N₂ / 0,5 H₂O (= einströmendes Gas 5.1, Edukte) bei einer Temperatur von 200 °C beaufschlagt. Der Absolutdruck (p_{feed}) beträgt 11 bar, der Volumenstrom beträgt 100 NI/h. Die Außenseite des Hohlkörpers 10 befindet sich unter atmosphärischem Druck (pₚₑᵣₘₑₐₜₑ = 1 bar absolut). Der von der Außenseite des Hohlkörpers 10 und dem Permeatraum 7 wegströmende Gasstrom (= Abgas 5.2) wird durch eine Kühlfalle 14 geleitet, deren Kühltemperatur -25 °C beträgt. Der die Kühlfalle 14 verlassende Gasstrom gekühlten Abgases 5.2 durchströmt einen Blasenzähler (nicht gezeigt).

Zu Beginn des Experimentes wird ein geringer Gasstrom von 20 Nml/min durch den Blasenzähler beobachtet. Nach wenigen Minuten ist ein Abfallen des Gasstromes auf 0 Nml/min zu beobachten. Gleichzeitig ist das Kondensieren und Ausfrieren von Wasser in der Kühlfalle 14 zu beobachten. Der Wasserfluss durch die Membran 1 beträgt ca. 5 m³/(m²·h·bar). Durch die Poren der Membran 1 permeiert ausschließlich Wasser. Stickstoff wird von der Membran 1 vollständig zurückgehalten.

### Beispiel 6:

Es wird der identische Aufbau und das identische Vorgehen zu Beispiel 5 gewählt. Bei Beibehaltung aller Parameter wird die Temperatur schrittweise auf 300 °C erhöht. Es wird dennoch ausschließlich die Permeation von Wasser durch die Membran 1 beobachtet.

### Beispiel 7:

Es wird der identische Aufbau und das identische Vorgehen zu Beispiel 5 gewählt. Bei Beibehaltung aller Parameter wird der Druck (p_{feed}) in dem Reaktorraum 6 schrittweise auf 4 bar reduziert. Neben der Permeation von Wasser wird auch die geringfügige Permeation von Stickstoff mit einem Fluss von 0,025 m³/(m²·h·bar) beobachtet. Das Wasser blockiert nicht mehr alle Poren. Einzelne Membrandefekte sind wasserfrei, wodurch auch ein Transport von Stickstoff ermöglicht ist.

### Beispiel 8:

Es wird der identische Aufbau und das identische Vorgehen zu Beispiel 5 gewählt. Dem Reaktorraum 6 wird ein gasförmiges Gemisch aus 0,5 H₂ / 0,5 H₂O zugeführt. Neben der Permeation von Wasser wird nur eine geringfügige Permeation von molekularem Wasserstoff mit einem Fluss von 0,055 m³/(m²·h·bar) beobachtet. Einzelne Membrandefekte sind wasserfrei, wodurch auch ein Transport von Wasserstoff ermöglicht ist.

### Beispiel 9:

Es wird der identische Aufbau und das identische Vorgehen zu Beispiel 5 gewählt. Dem Reaktorraum 6 wird ein gasförmiges Gemisch aus 0,5 CO₂ / 0,5 H₂O zugeführt. Neben der Permeation von Wasser wird nur eine geringfügige Permeation von molekularem Kohlendioxid mit einem Fluss von 0,03 m³/(m²·h·bar) beobachtet. Einzelne Membrandefekte sind wasserfrei, wodurch auch ein Transport von Kohlendioxid ermöglicht ist.

### Beispiel 10:

Es wird der identische Aufbau und das identische Vorgehen zu Beispiel 5 gewählt. Dem Reaktorraum 6 wird ein gasförmiges Gemisch aus 0,5 CH₄ / 0,5 H₂O zugeführt. Es wird ausschließlich die Permeation von Wasser beobachtet. Bei Erhöhung der Temperatur auf 250 °C wird ebenfalls nur die Permeation von Wasser beobachtet. Methan wird vollständig von der Membran 1 zurückgehalten

### Beispiel 11:

Es wird der identische Aufbau und das identische Vorgehen zu Beispiel 5 gewählt. Dem Reaktorraum 6 wird ein gasförmiges Gemisch aus 0,3 H₂ / 0,2 CO₂ / 0,2 CH₄ und 0,3 H₂O zugeführt. Neben der Permeation von Wasser wird nur eine geringfügige Permeation von Wasserstoff und Kohlendioxid beobachtet. Einzelne Membrandefekte sind wasserfrei, wodurch auch ein Transport von Wasserstoff und Kohlendioxid ermöglicht ist.

Die Ergebnisse der Versuche gemäß den Beispielen 5, 6, 8 bis 11 sind in der Tabelle der Fig. 5 zusammengefasst.

### Beispiel 12:

Es wurde eine Membran 1 unter Verwendung von Phenolharz hergestellt. Es wurden zwei Phenolharzpulver (FB8001; FERS und 0235DP; HEXION) eingesetzt. Das erste Phenolharzpulver FB8001 besaß nach Herstellerangaben einen Hexaminanteil von 8,9 % und eine mittlere Molmasse des Novolaks von 2625 g/mol. Das zweite Phenolharzpulver 0235DP besaß eine mittlere Molmasse des Novolaks von 900 g/mol. Die Optimierung der Precursorchemie führte zu einer Mischung bestehend aus je 7,5 g ersten und zweiten Phenolharzpulvers, die zunächst jeweils in 22,5 g Methanol gelöst wurden. Anschließend wurden einer Mischung der gelösten ersten und zweiten Phenolharzpulver 20 g 1-Methyl-2-pyrrolidon (≥ 99,5 %) zugegeben. Infolge der einsetzenden Reaktion wurde aus den gelösten Phenolharzpulvern eine goldbraune Polymerlösung als Phenolharz-Präkursor erhalten.

Die hergestellten Phenolharz-Präkursoren wurden auf γ-Al₂O₃-Träger-Membranen in Einkanalrohrgeometrie wie zum Beispiel 1 beschrieben aufgebracht. Die Beschichtung der Innenwand 10.1 der Al₂O₃-Einkanalrohre erfolgte durch Tauchbeschichtung über eine Minute. Die Phenolharz-Schichten wurden zunächst an Luft getrocknet und später bei einer Temperatur von 150 °C für 3 Stunden zur vollständigen Vernetzung gebracht. Die Zersetzung des Polymers zu Kohlenstoff erfolgte durch Pyrolyse unter Stickstoff- /Argon-Atmosphäre bei 800 °C.

Die vorgenannten Ausführungsbeispiele und Beispiele unter der erfindungsgemäßen Verwendung einer permselektiven Membran 1 können im Rahmen der Erfindung frei miteinander kombiniert werden.

### Bezugszeichenliste

- 1: Membran
- 1.1: Eduktseite
- 2: Träger
- 2.1: Permeatseite
- 3.1: erste Zwischenschicht
- 3.2: zweite Zwischenschicht
- 3.3: dritte Zwischenschicht
- 4: PEM-Brennstoffzelle
- 4.1: Medienzuleitung
- 4.2: Medienableitung
- 5.1: einströmendes Gas
- 5.2: Abgas
- 6: Reaktorraum
- 7: Permeatraum
- 8: Trennwand
- 9: Gehäuse
- 9.1: Innenraum
- 10: Hohlkörper
- 10.1: Innenwand (des Hohlkörpers 10)
- 11: Vakuumpumpe
- 12: Steuerungseinheit
- 13: Gasleitung
- 14: Kühlfalle
- 15: Druckeinstellvorrichtung
- 16: Temperatureinstellvorrichtung

## Patentansprüche

1. Verwendung einer permselektiven Membran (1), die eine Kohlenstoffmembran aus einem Material ist, dessen Struktur graphitähnlich und durch wenigstens eine Folge von Schichten des Materials gebildet ist, wobei die Schichten in Ebenen angeordnet vorliegen, zwischen benachbarten Schichten ein mittlerer Abstand der Schichten von mehr als 0,335 nm (3,35 Å) und weniger als 0,45 nm (4,5 Å) vorliegt und die Folge der Schichten turbostratisch fehlgeordnet ist und das Material wenigstens auf seinen freien Oberflächen hydrophob ist, zur Abtrennung von Wasser aus chemischen Gleichgewichtsreaktionen, bei denen die Gleichgewichtsreaktionen unter Anwesenheit eines wasserhaltigen Gasgemisches erfolgen.

2. Verwendung einer permselektiven Membran (1), die eine Kohlenstoffmembran aus einem Material ist, dessen Struktur graphitähnlich und durch wenigstens eine Folge von Schichten des Materials gebildet ist, wobei die Schichten in Ebenen angeordnet vorliegen, zwischen benachbarten Schichten ein mittlerer Abstand der Schichten von mehr als 0,335 nm (3,35 Å) und weniger als 0,45 nm (4,5 Å) vorliegt und die Folge der Schichten turbostratisch fehlgeordnet ist und das Material wenigstens auf seinen freien Oberflächen hydrophob ist, zum Austausch von Wasser zwischen zwei Gasströmen.

3. Verwendung einer permselektiven Membran (1), die eine Kohlenstoffmembran aus einem Material ist, dessen Struktur graphitähnlich und durch wenigstens eine Folge von Schichten des Materials gebildet ist, wobei die Schichten in Ebenen angeordnet vorliegen, zwischen benachbarten Schichten ein mittlerer Abstand der Schichten von mehr als 0,335 nm (3,35 Å) und weniger als 0,45 nm (4,5 Å) vorliegt und die Folge der Schichten turbostratisch fehlgeordnet ist und das Material wenigstens auf seinen freien Oberflächen hydrophob ist, zum Befeuchten und Erwärmen von in eine PEM-Brennstoffzelle (4) einströmenden Gasen (5.1) mit aus feuchten und heißen Abgasen (5.2) der PEM--Brennstoffzelle (4) abgetrenntem Wasser.

4. Verwendung einer permselektiven Membran (1) nach einem der Ansprüche 1 bis 3, **dadurch gekennzeichnet, dass** das Material als eine Schicht auf einem porösen keramischen Träger (2) angeordnet ist.

## Claims

1. Use of a permselective membrane (1), which is a carbon membrane of a material whose structure is graphite-like and is formed by at least one sequence of layers of the material, the layers being arranged in planes, there being an average spacing of more than 0.335 nm (3.35 Å) and less than 0.45 nm (4.5 Å) between adjacent layers, the sequence of layers being turbostratically disordered and the material being hydrophobic at least on its free surfaces, for the separation of water from chemical equilibrium reactions, wherein the equilibrium reactions take place in the presence of a gas mixture containing water.

2. Use of a permselective membrane (1), which is a carbon membrane of a material whose structure is graphite-like and is formed by at least one sequence of layers of the material, the layers being arranged in planes, there being an average spacing of more than 0.335 nm (3.35 Å) and less than 0.45 nm (4.5 Å) between adjacent layers, the sequence of layers being turbostratically disordered and the material being hydrophobic at least on its free surfaces, for the exchange of water between two gas streams.

3. Use of a permselective membrane (1), which is a carbon membrane of a material whose structure is graphite-like and is formed by at least one sequence of layers of the material, the layers being arranged in planes, there being an average spacing of more than 0.335 nm (3.35 Å) and less than 0.45 nm (4.5 Å) between adjacent layers, the sequence of layers being turbostratically disordered and the material being hydrophobic at least on its free surfaces, for humidifying and heating gases (5.1), which flow into a PEM fuel cell (4), with water separated from moist and hot exhaust gases (5.2) of the PEM fuel cell (4).

4. Use of a permselective membrane (1) according to any one of claims 1 to 3, **characterized in that** the material is arranged as a layer on a porous ceramic support (2).

## Revendications

1. Utilisation d'une membrane permsélective (1) qui est une membrane de carbone en un matériau dont la structure est semblable à celle du graphite et qui est formée par au moins une succession de couches du matériau, les couches étant disposées dans des plans, une distance moyenne entre des couches adjacentes étant supérieure à 0,335 nm (3,35 Å) et inférieure à 0,45 nm (4,5 Å), la succession des couches étant désordonnée de manière turbostratique et le matériau étant hydrophobe au moins sur ses surfaces libres, pour la séparation de l'eau à partir de réactions chimiques équilibrées, lesdites réactions équilibrées ayant lieu en présence d'un mélange gazeux contenant de l'eau.

2. Utilisation d'une membrane permsélective (1) qui est une membrane de carbone en un matériau dont la structure est semblable à celle du graphite et qui est formée par au moins une succession de couches du matériau, les couches étant disposées dans des plans, une distance moyenne entre des couches adjacentes étant supérieure à 0,335 nm (3,35 Å) et inférieure à 0,45 nm (4,5 Å), la succession des couches étant désordonnée de manière turbostratique et le matériau étant hydrophobe au moins sur ses surfaces libres, pour l'échange d'eau entre deux courants gazeux.

3. Utilisation d'une membrane permsélective (1) qui est une membrane de carbone en un matériau dont la structure est semblable à celle du graphite et qui est formée par au moins une succession de couches du matériau, les couches étant disposées dans des plans, une distance moyenne entre des couches adjacentes étant supérieure à 0,335 nm (3,35 Å) et inférieure à 0,45 nm (4,5 Å), la succession des couches étant désordonnée de manière turbostratique et le matériau étant hydrophobe au moins sur ses surfaces libres, pour humidifier et réchauffer des gaz (5.1), qui entrent dans une pile à combustible (4), avec de l'eau séparée des gaz d'échappement humides et chauds (5.2) de la pile à combustible PEM (4).

4. Utilisation d'une membrane permsélective (1) selon l'une quelconque des revendications 1 à 3, **caractérisée en ce que** le matériau est disposé sous la forme d'une couche sur un support céramique poreux (2).
